# FASCICULE DE BREVET EUROPEEN

(11) **EP 3 235 407 B1**
(45) Date de publication et mention de la délivrance du brevet: **26.02.2020**
(21) Numéro de dépôt: 17305460.2
(22) Date de dépôt: 21.04.2017
(51) Int. Cl.: A47G 7/04, A01G 9/02, A24F 19/00, B65F 1/14

(54) **ÉLÉMENT DE MOBILIER URBAIN, KIT ET PROCÉDÉ DE FIXATION D'ÉLÉMENTS DE MOBILIER URBAN SUR DES POTELETS**
STADTMOBILIARELEMENT, KIT UND BEFESTIGUNGSVERFAHREN DER STADTMOBILIARELEMENTE AUF PFOSTEN
STREET FURNITURE ELEMENT, KIT AND METHOD FOR SECURING STREET FURNITURE ELEMENTS ON STUDS

(30) Priorité: 22.04.2016 FR 1600676
(43) Date de publication de la demande: 25.10.2017
(73) Titulaire: Cachelin, Stéphane, 75018 Paris (FR)
(72) Inventeur: Cachelin, Stéphane, 75018 Paris (FR)
(74) Mandataire: Plasseraud IP

(56) Documents cités:
- GB-A- 2 380 398
- US-A1- 2008 016 762
- US-A1- 2013 263 505

## Description

L'invention porte sur un kit de mobilier urbain destiné à être installé sur des potelets.

Les potelets permettent de protéger les piétons des zones de circulation automobile. Ils sont de différents formes, notamment cylindriques, surmontés ou non d'une sphère. La ville de Paris en compte à elle seule plus de 355 000. Ces potelets n'ont d'autre utilité à ce jour que de protéger les piétons. L'invention permet d'allier à cette première fonction de protection, une seconde fonction d'amélioration et d'embellissement de l'espace urbain.

US2013263505 concerne un pot de fleur configuré spécifiquement pour être monté facilement sur un pilier en bord de mer.

Il est décrit un élément de mobilier urbain apte à être fixé, de préférence de façon amovible, sur un potelet.

Il est également décrit un procédé de fixation d'un élément de mobilier urbain sur un potelet.

L'invention porte sur un kit de mobilier urbain, et notamment un kit d'embellissement de potelet tel que défini dans les revendications.

Elle porte enfin sur l'utilisation d'un kit de mobilier urbain pour embellir une zone urbaine.

Au sens de la présente invention, on entend par potelet tout petit poteau destiné à réguler et contenir un flux de circulation. Les potelets sont notamment utilisés en ville pour protéger les piétons de la circulation automobile ou pour empêcher le stationnement sur des trottoirs. Les potelets au sens de l'invention sont notamment les potelets qui sont scellés dans le sol. Il existe différents types de potelets, la plupart sont de section transversale à symétrie centrale, ils peuvent être dotés d'un élément sphérique ou ovoïde à leur extrémité non fixée au sol en utilisation. Dans la description qui suit, les potelets sont toujours décrits comme des potelets fixés au sol. Les directions sont données par rapport au sol, tout ce qui est qualifié d'« inférieur » se réfère à une zone plus proche du sol, alors que tout ce qui est qualifié de « supérieur » se réfère à une zone plus éloignée du sol.

On entend par élément de mobilier urbain, tout type de petit mobilier urbain tel que notamment des supports pour plantations, vasques, des cendriers, des poubelles, des tablettes, etc.

Il est décrit un élément de mobilier urbain apte à être fixé, de préférence de façon amovible sur un potelet.

L'élément de mobilier urbain comprend une partie fonctionnelle comprenant une base qui est solidaire d'un manchon cylindrique, doté d'un trou traversant apte à recevoir un élément de fixation, ledit manchon présentant un diamètre interne supérieur à 2R. R est déterminé par l'homme du métier en fonction du plus grand diamètre des potelets sur lequel le dispositif est destiné à être installé. De façon classique R est par exemple compris entre 3 et 10 cm. Pour des potelets de type à boule il est d'environ 3,8 cm à environ 6,0 cm, pour des potelets de type à gorge il est d'environ 4,5 cm à environ 5,1 cm et pour des potelets de type Champs Elysées, il est d'environ 3,3 cm.

Le diamètre interne du manchon doit être supérieur à 2R étant donné qu'en position d'utilisation sur le potelet, le manchon enserrera l'extrémité libre du potelet. De façon particulière, le diamètre interne du manchon est de 2R+ 1%R à 2R + 10%R.

De façon avantageuse le manchon est de section transversale ronde. Bien entendu toute autre section pourrait être envisagée.

La base peut être la partie inférieure en position d'utilisation de l'élément de mobilier. Cette base est généralement plane. Classiquement cette base permet de poser ledit élément de mobilier sur une surface plane horizontale.

La base ou au moins la partie centrale de cette base est solidaire du manchon cylindrique présentant un diamètre interne supérieur à 2R. L'extrémité inférieure du manchon, c'est-à dire l'extrémité opposée à la base est ouverte. Le manchon peut être doté d'un trou traversant apte à recevoir un élément de fixation. Le trou traversant est disposé dans la partie inférieure du manchon de façon à se trouver en utilisation en regard du potelet qu'il enserrera.

Selon un mode de réalisation particulier, le manchon comporte dans sa partie interne une paroi transversale sensiblement parallèle à la base définissant un volume libre vide entre cette paroi, la base et la paroi cylindrique formant le manchon central. Dans ce mode de réalisation, en utilisation sur un potelet, ce n'est plus la base de l'élément de mobilier qui vient en appui sur l'extrémité supérieure libre du potelet mais la paroi transversale. Cette paroi permet ainsi non seulement de rigidifier le manchon mais également d'éviter toute déformation de la base de l'élément de mobilier.

Selon un mode de réalisation particulier, la paroi transversale peut être en forme de surface de demi-sphère. Dans ce cas, l'élément de mobilier urbain sera tout à fait adapté pour une utilisation sur un potelet à extrémité sphérique.

Selon un mode de réalisation spécifique, l'élément de mobilier urbain est une vasque apte à recevoir un pot pour plantation. La vasque est dotée d'un système permettant de sécuriser le pot pour plantation qu'il est destiné à accueillir. Un tel système peut être un trou traversant dans la paroi de la vasque dans laquelle est insérée une tige qui coopère avec la surface externe du pot placé à l'intérieur.

L'élément de mobilier urbain peut être réalisé en tout matériau apte à être utilisé en extérieur de façon durable, notamment en matériau synthétique ou métallique potentiellement peint selon les normes d'usage pour les mobiliers urbains. Il peut être réalisé par moulage, sertissage, coupe et soudure, etc.

Il est décrit un procédé de fixation d'un élément de mobilier urbain tel que décrit précédemment sur un potelet. Ce procédé comprend les étapes de :
- choisir l'élément de mobilier urbain
- choisir un potelet
- enfiler le manchon sur l'extrémité libre d'un potelet
- sécuriser à l'aide d'un moyen de fixation amovible.

L'invention porte sur un kit de mobilier urbain comprenant :
- une bague cylindrique de rayon externe R, de rayon interne Ri, de hauteur H fendue sur la hauteur H ;
- un élément de mobilier urbain dont la base est solidaire d'un manchon cylindrique central, doté d'un trou traversant apte à recevoir un élément de fixation apte à coopérer avec la bague, ledit manchon central présentant un diamètre interne supérieur à 2R ;
- au moins un élément de fixation apte à solidariser l'élément de mobilier urbain et la bague,
en utilisation, ledit manchon cylindrique entoure la bague qui elle-même enserre le potelet et ledit élément de fixation est en appui sur la bague et bloque ledit élément de mobilier sur le potelet.

La bague peut être en toute matière souple, présentant une élasticité, de préférence à mémoire de forme. Elle peut notamment être en matière plastique, non dure, de préférence en polyuréthane, poly(chlorure de vinyle), caoutchouc nitrile, etc. Le fait qu'elle soit fendue sur toute sa hauteur permet de lui conférer une déformabilité nécessaire pour la placer autour d'un potelet. Par ailleurs, de façon à assurer à la fois une déformabilité et une rigidité suffisantes, selon un mode de réalisation particulier, la bague est telle que (R-Ri)/R = 1/20 à 1/4, de préférence de 1/15 à 1/6, plus préférentiellement encore de 1/12 à 1/8. La hauteur de la bague est telle qu'elle assure une coopération suffisante avec le manchon de l'élément de mobilier d'une part et avec le potelet qu'elle est destinée à enserrer en utilisation. A cet effet, la hauteur H de la bague est au moins égale au rayon Ri. Selon un mode de réalisation particulier, les faces interne et externes de la bague fendue sont lisses, c'est-à-dire dépourvues de toute rainures de renfort. Le fait que le matériau de la bague ne soit pas dur mais présente une certaine élasticité permet une coopération optimale avec le manchon de l'élément de mobilier d'une part et avec le potelet qu'elle est destinée à enserrer en utilisation d'autre part, car elle peut en épouser la forme. Ceci permet également une réutilisation de la bague.

Dans le kit de mobilier urbain selon l'invention, l'élément de mobilier comprend une base qui peut être la partie inférieure en position d'utilisation de l'élément de mobilier. Cette base est généralement plane. Classiquement cette base permet de poser ledit élément de mobilier sur une surface plane horizontale.

La partie centrale de cette base est solidaire d'un manchon cylindrique présentant un diamètre interne supérieur à 2R. L'extrémité inférieure du manchon, c'est-à dire l'extrémité opposée à la base est ouverte. En utilisation, la partie inférieure du manchon entoure la bague qui elle-même enserre le potelet. Le manchon est doté d'un trou traversant apte à recevoir un élément de fixation apte à coopérer avec la bague. Le trou traversant est disposé dans la partie inférieure du manchon de façon à se trouver en utilisation en regard de la bague.

Selon un mode de réalisation particulier, le manchon comporte dans sa partie interne une paroi transversale sensiblement parallèle à la base définissant un volume libre vide entre cette paroi, la base et la paroi cylindrique formant le manchon central. Dans ce mode de réalisation, en utilisation sur un potelet, ce n'est plus la base de l'élément de mobilier qui vient en appui sur l'extrémité supérieure libre du potelet mais la paroi transversale. Cette paroi permet ainsi non seulement de rigidifier le manchon mais également d'éviter toute déformation de la base de l'élément de mobilier.

Selon un mode de réalisation particulier, la paroi transversale peut être en forme de surface de demi-sphère. Dans ce cas, le kit sera tout à fait adapté pour une utilisation sur un potelet à extrémité sphérique.

Selon un mode de réalisation spécifique, dans le kit selon l'invention, l'élément de mobilier urbain est une vasque apte à recevoir un pot pour plantation. La vasque est dotée d'un système permettant de sécuriser le pot pour plantation qu'il est destiné à accueillir.

Le kit pourra être utilisé de la façon suivante :
La bague est insérée par force autour du potelet que l'on souhaite embellir. Pour les potelets ayant une extrémité sphérique, la bague sera remontée pour être en contact avec la base de la sphère. Le manchon sera ensuite enfilé sur le potelet de façon à ce que son extrémité libre vienne en regard de la bague. L'élément de mobilier est alors en place. Il peut être sécurisé en insérant dans le trou traversant du manchon un élément de connexion venant en appui sur la bague, par exemple une vis antivol à empreinte spécifique.

Le kit selon l'invention est particulièrement adapté pour être utilisé comme moyen d'embellissement, de végétalisation de milieu urbain. Il peut facilement être mis en place et retiré.

L'invention sera décrite de façon plus détaillée ci-après en lien avec les dessins annexés sur lesquels :
La figure 1 est une vue schématique en coupe d'un élément de mobilier urbain installé sur un potelet ;
La figure 2 est une vue schématique en coupe d'un kit selon l'invention placé sur un potelet ;
La figure 3 est une coupe selon l'axe AA' de la figure 2 ;
La figure 4 est une coupe transversale d'un élément de mobilier urbain avec vasque ;
La figure 5 est une coupe transversale d'un élément de mobilier urbain avec tablette de dégustation.

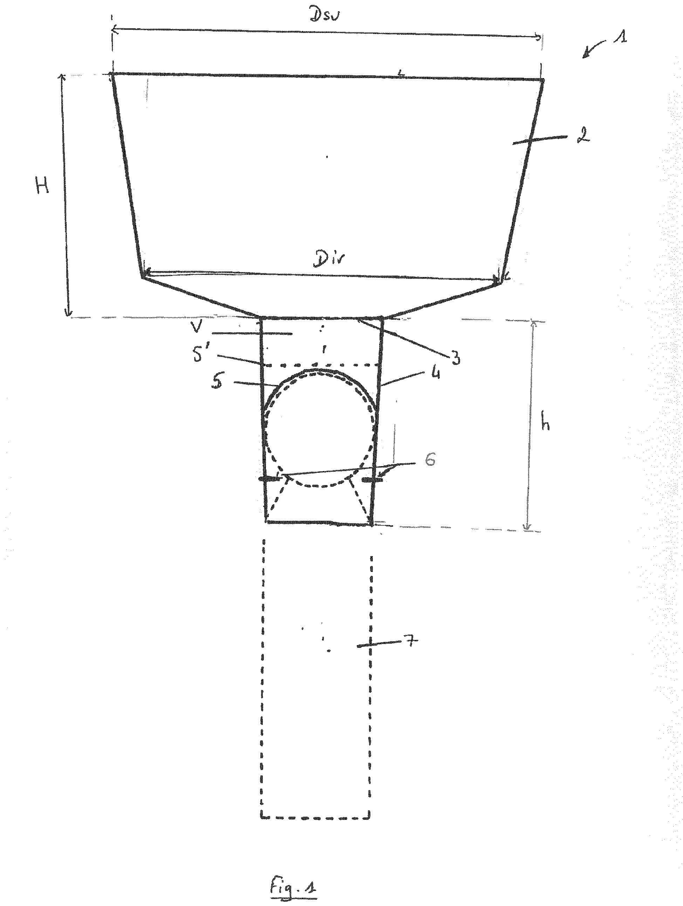

La figure 1 représente un élément de mobilier urbain 1 qui est un support pour plantation comprenant une vasque 2, dont la base 3 est solidaire d'un manchon 4 qui comprend une paroi 5 délimitant un volume fermé V formé entre la base 3, ladite paroi 5 et la paroi latérale 4 du manchon ; et un système de fixation 6 bloquant sur plusieurs axes l'élément 1 sur le potelet 7.

En traits pointillés est représentée une autre paroi 5' horizontale, qui illustre un autre mode de réalisation de l'élément de mobilier urbain.

A titre d'exemple, l'élément de mobilier selon ce mode de réalisation présente les dimensions suivantes :
Le diamètre supérieur Dsv de la vasque 2 est de 37 cm. Le diamètre inférieur Div de la vasque 2 est de 26 cm, la hauteur H de la vasque 2 est de 20,5 cm. Le diamètre du manchon 4 est de 9 cm, la hauteur h du manchon 4 est de 17 cm. Les dimensions des diamètres s'entendent des diamètres internes.

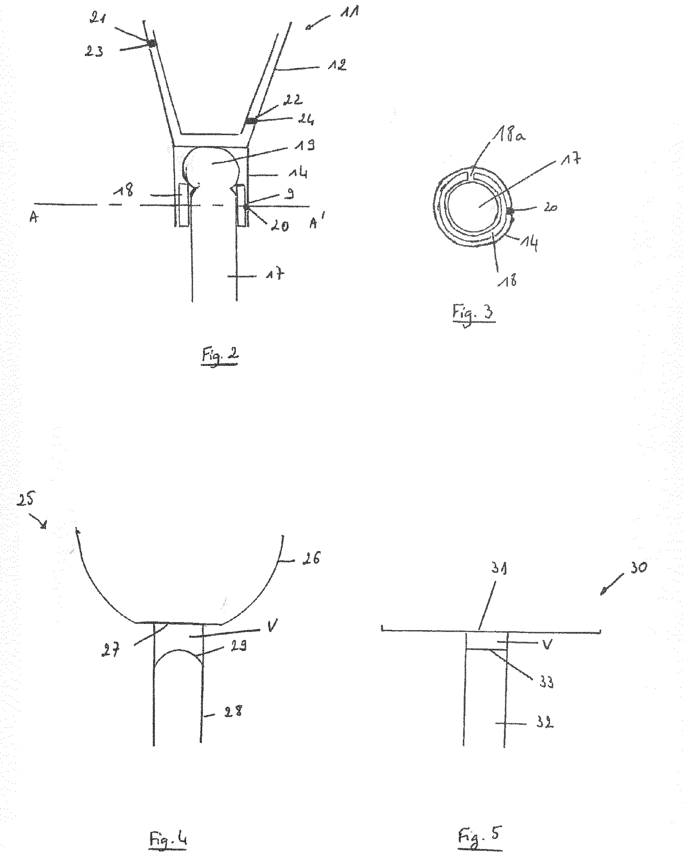

Sur la figure 2 est représenté un mode de réalisation d'un kit de mobilier urbain 11 fixé sur un potelet 17. L'élément de mobilier urbain est un support pour plantation sous la forme d'une vasque 12 conique dans laquelle est introduit un pot de fleur 8. La base 13 est prolongée par un manchon 14 qui vient entourer le potelet 17 sur lequel le support de plantation 11 est fixé. La paroi cylindrique formant le manchon 4 est doté dans sa partie inférieure d'un trou traversant 9. Une bague cylindrique 18 enserre la partie haute du potelet 17 en venant en appui sur l'extrémité sphérique 19 inférieure de ce dernier et est entouré par le manchon 4 dans sa partie inférieure. Dans le trou traversant est insérée une vis antivol à empreinte spécifique 20 qui vient appuyer en force sur la bague cylindrique.

La bague cylindrique 18 comprend une fente 18a sur toute sa hauteur. Cette fente 18a permet de le placer par force autour du potelet. Elle permet également son retrait sans endommager le potelet.

De façon à sécuriser le pot de fleurs dans la vasque 12, celle-ci est dotée de 2 trous traversants 21 et 22, diamétralement opposés selon l'axe AA' et disposés respectivement dans la partie haute et la partie basse de la vasque. Dans ces trous 21 et 22 sont insérées des vis antivol à empreinte spécifique 23 et 24 qui viennent en appui sur la paroi externe du pot de fleur.

Le pot de fleur peut être retiré de la vasque simplement en retirant les 2 vis antivol à empreinte spécifique, afin d'entretenir les plantations, renouveler les plantations ou simplement en hiver les retirer pour les protéger du gel.

Sur la figure 4 est représenté un autre support de plantation 25, qui comprend une vasque 26 en cul de poule dont la base 27 est solidaire d'un manchon 28 comprenant une paroi interne 29 dont la surface est courbe.

Sur la figure 5 est représenté un autre élément de mobilier urbain qui est une tablette 30 dont la base 31 est solidaire d'un manchon 32 comprenant une paroi interne33 horizontale, c'est-à-dire parallèle à la base 31 et perpendiculaire à la paroi du manchon 32.

Grace à l'invention il est très facile d'installer du mobilier urbain sur les potelets présents dans l'espace public afin d'embellir et notamment de végétaliser cet espace et d'en améliorer ainsi la convivialité. Le retrait de ce mobilier est très aisé et ne cause aucun endommagement des potelets, il est ainsi aisé de transformer et moduler au gré des envies et/ou des besoins l'espace urbain.

## Revendications

1. Kit de mobilier urbain (1 ; 11 ; 25 ;30) apte à être fixé de façon amovible sur un potelet de la voirie (7;17) comprenant :
- une bague cylindrique (18) de rayon externe R, de rayon interne Ri, de hauteur H fendue sur la hauteur H ;
- un élément de mobilier urbain dont la base (3 ; 13 ;27 ;31) est solidaire d'un manchon cylindrique central (4 ; 14 ; 28 ;32), doté d'un trou traversant (9) apte à recevoir un élément de fixation (6 ; 20) destiné à coopérer avec la bague, ledit manchon central présentant un diamètre interne supérieur à 2R, R étant le plus grand diamètre du potelet destiné à recevoir cet élément ;
- au moins un élément de fixation (20) apte à solidariser l'élément de mobilier urbain et la bague (18),
en utilisation, ledit manchon cylindrique entoure la bague (18) qui elle-même enserre le potelet et ledit au moins élément de fixation (20) est en appui sur la bague (18) et bloque ledit élément de mobilier sur le potelet.

2. Kit de mobilier urbain selon la revendication 1, **caractérisé par le fait que** l'élément de mobilier urbain est un support pour plantations, une vasque, un cendrier, une poubelle, une tablette.

3. Kit de mobilier urbain selon la revendication 1 ou 2, **caractérisé par le fait que** la bague est en matière plastique non rigide, de préférence en polyuréthane, poly(chlorure de vinyle), caoutchouc nitrile, etc.

4. Kit de mobilier urbain selon l'une quelconque des revendications 1 à 3, **caractérisé par le fait que** la bague est telle que la hauteur H est au moins égale au rayon Ri.

5. Kit de mobilier urbain selon l'une quelconque des revendications 1 à 4, **caractérisé par le fait que** (R-Ri)/R = 1/20 à 1/4.

6. Kit de mobilier urbain selon l'une quelconque des revendications 1 à 5, **caractérisé par le fait que** le manchon comporte dans sa partie interne une paroi transversale (5 ; 5' ; 29 ; 33) sensiblement parallèle à la base définissant un volume libre vide (V) entre cette paroi, la base et la paroi formant le manchon.

7. Kit de mobilier urbain selon la revendication 6, **caractérisé par le fait que** la paroi transversale est en forme de surface de demi-sphère.

8. Kit de mobilier urbain selon l'une quelconque des revendications 1 à 7, **caractérisé par le fait que** l'élément de mobilier urbain est une vasque apte à recevoir un pot pour plantation.

9. Kit de mobilier urbain selon la revendication 8, **caractérisé par le fait que** la vasque est dotée d'un système permettant de sécuriser le pot pour plantation destiné à être disposé dans ladite vasque.

10. Utilisation d'un kit tel que défini à l'une quelconque des revendications 1 à 9 pour la mise en place de végétalisation urbaine, de cendriers, de poubelles, de tablettes.

## Patentansprüche

1. Stadtmobiliar-Bausatz (1; 11; 25; 30), der abnehmbar an einem Straßenpfosten (7; 17) befestigt werden kann, umfassend :
- einen zylindrischen Ring (18) mit einem Außenradius R, einem Innenradius Ri und einer Höhe H, der über die Höhe H geschlitzt ist;
- ein Stadtmobiliar-Element, dessen Basis (3; 13; 27; 31) fest mit einer zentralen zylindrischen Hülse (4; 14; 28; 32) verbunden ist, die mit einem Durchgangsloch (9) versehen ist, das geeignet ist, ein Befestigungselement (6; 20) aufzunehmen, welches dazu bestimmt ist, mit dem Ring zusammenzuwirken, wobei die zentrale Hülse einen Innendurchmesser von mehr als 2R aufweist, wobei R der größte Durchmesser des Pfostens ist, der das Element aufnehmen soll;
- wenigstens ein Befestigungselement (20), das geeignet ist, das Straßenmobiliarelement und den Ring (18) fest zu verbinden, wobei die zylindrische Hülse im Gebrauch den Ring (18) umgibt, der seinerseits den Pfosten umgreift, und wobei das wenigstens eine Befestigungselement (20) an dem Ring (18) anliegt und das Stadtmobiliar-Element am Pfosten verriegelt.

2. Stadtmobiliar-Bausatz nach Anspruch 1, **dadurch gekennzeichnet, dass** das Stadtmobiliar-Element ein Träger für Pflanzen, eine Schale, ein Aschenbecher, ein Abfalleimer, eine Tafel ist.

3. Stadtmobiliar-Bausatz nach Anspruch 1 oder 2, **dadurch gekennzeichnet, dass** der Ring aus einem nicht starren Kunststoffmaterial, vorzugsweise Polyurethan, Polyvinylchlorid, Nitrilkautschuk usw., gebildet ist.

4. Stadtmobiliar-Bausatz nach einem der Ansprüche 1 bis 3, **dadurch gekennzeichnet, dass** der Ring so beschaffen ist, dass die Höhe H wenigstens gleich dem Radius Ri ist.

5. Stadtmobiliar-Bausatz nach einem der Ansprüche 1 bis 4, **dadurch gekennzeichnet, dass** (R-Ri)/R = 1/20 bis 1/4 ist.

6. Stadtmobiliar-Bausatz nach einem der Ansprüche 1 bis 5, **dadurch gekennzeichnet, dass** die Hülse in ihrem inneren Teil eine Querwand (5; 5'; 29; 33) aufweist, die im Wesentlichen parallel zur Basis verläuft und ein freies, leeres Volumen (V) zwischen dieser Wand, der Basis und der die Hülse bildenden Wand begrenzt.

7. Stadtmobiliar-Bausatz nach Anspruch 6, **dadurch gekennzeichnet, dass** die Querwand die Form einer Halbkugelfläche hat.

8. Stadtmobiliar-Bausatz nach einem der Ansprüche 1 bis 7, **dadurch gekennzeichnet, dass** das Stadtmobiliar-Element eine Schale ist, die zur Aufnahme eines Pflanztopfes geeignet ist.

9. Stadtmobiliar-Bausatz nach Anspruch 8, **dadurch gekennzeichnet, dass** die Schale mit einem System zur Befestigung des in die Schale zu stellenden Pflanztopfes versehen ist.

10. Verwendung eines Bausatzes nach einem der Ansprüche 1 bis 9 für die Anbringung von Stadtbegrünung, Aschenbechern, Abfallbehältern, Tafeln.

## Claims

1. A street furniture kit (1; 11; 25; 30) capable of being removably fastened on a road post (7; 17) comprising:
- a cylindrical ring (18) of external radius R, of internal radius Ri, of height H slit over the height H;
- a street furniture element whose base (3; 13; 27; 31) is integral with a central cylindrical sleeve (4; 14; 28; 32), provided with a through hole (9) capable of receiving a fastening element (6; 20) intended to cooperate with the ring, said central sleeve having an inner diameter greater than 2R, R being the largest diameter of the post intended to receive this element;
- at least one fastening element (20) capable of attaching the street furniture element and the ring (18),
in use, said cylindrical sleeve surrounds the ring (18) which in turn encloses the post and said at least fastening element (20) is bearing on the ring (18) and blocks said furniture element on the post.

2. The street furniture kit according to claim 1, **characterised by** the fact that the street furniture element is a support for plantations, a basin, an ashtray, a trash can, a shelf.

3. The street furniture kit according to claim 1 or 2, **characterised by** the fact that the ring is made of a non-rigid plastic material, preferably of polyurethane, poly (vinyl chloride), nitrile rubber, etc.

4. The street furniture kit according to any one of claims 1 to 3, **characterised by** the fact that the ring is such that the height H is at least equal to the radius Ri.

5. The street furniture kit according to any one of claims 1 to 4, **characterised by** the fact that (R-Ri)/R = 1/20 to 1/4.

6. The street furniture kit according to any one of claims 1 to 5, **characterised by** the fact that the sleeve includes in its inner portion a transverse wall (5; 5'; 29; 33) substantially parallel to the base defining an empty free volume (V) between this wall, the base and the wall forming the sleeve.

7. The street furniture kit according to claim 6, **characterised by** the fact that the transverse wall is in the shape of a hemisphere surface.

8. The street furniture kit according to any one of claims 1 to 7, **characterised by** the fact that the street furniture element is a basin capable of receiving a plantation pot.

9. The street furniture kit according to claim 8, **characterised by** the fact that the basin is provided with a system allowing to secure the plantation pot intended to be disposed in said basin.

10. A use of a kit as defined in any one of claims 1 to 9 for the placement of street greening, ashtrays, trash cans, shelves.
